# EUROPEAN PATENT APPLICATION

(11) **EP 4 715 632 A1**
(43) Date of publication of application: **25.03.2026**
(21) Application number: 24201024.7
(22) Date of filing: 18.09.2024
(51) Int. Cl.: G06F 16/55, G06N 3/02, G06N 3/082, G06N 3/096

(54) **APPARATUS, DATA CARRIER, COMPUTER PROGRAM, OBJECT DETECTOR, AND METHOD FOR PRUNING A NEURAL NETWORK**

(71) Applicant: AUMOVIO Germany GmbH, 60488 Frankfurt am Main (DE)
(72) Inventor: Shoeb, Youssef Omar, 30175 Hannover (DE)
(74) Representative: Aumovio Corporation

(57) **Abstract**

Embodiments of the present disclosure relate to an apparatus, a data carrier, a computer program, an object detector, and a method for pruning a neural network for an object detector. The method comprises identifying one or more critical neurons relevant for a first sub-category of an object class. Further, the method comprises adjusting the critical neurons in order to adapt such that a deviation between representations of the first sub-category and a second sub-category of the object class decreases in the latent space. Also, the method includes removing one or more of the critical neurons which are relevant for the first sub-category and less relevant for the second sub-category.

## Description

Embodiments of the present disclosure relate to an apparatus, a data carrier, a computer program, an object detector, and a method for pruning a neural network for an object detector. In particular, but not exclusively, the present disclosure relates to a concept for object detectors for autonomous and/or assisted driving.

Object detectors are AI (artificial intelligence) models designed to identify and locate specific objects within images or video frames. They work by predicting bounding boxes and assigning class labels to the objects in the visual data. Key technologies include methods like convolutional neural networks (CNNs) and more advanced frameworks like YOLO (You Only Look Once) and Faster R-CNN, which allow real-time detection. Object detectors are widely applied across various industries, including autonomous driving for identifying pedestrians, infrastructure objects, and vehicles, healthcare for analyzing medical images, retail for inventory management and surveillance, and augmented reality for object recognition and interaction in real-time environments. Their versatility and precision make them essential tools in modern AI-driven applications.

So far, object detectors are trained in a closed-world setting which means that objects are classified into a set of known classes. However, in an open-world setting like autonomous driving, the object detector might face objects that were not included in the training set and therefore these objects may be missed or wrongly classified by the object detector and pose a safety hazard for the autonomous driving system. Techniques to solve these issues rely on large pre-trained models that were trained on very large datasets to produce robust latent-space representations that are more robust to approaches for outlier detection. However, these methods have the main issue of relying on very large models for having a robust latent-space representation. Therefore, they may be unsuitable for some applications. For example, they cannot be applied in automotive applications due to their high computational and memory demands, which lead to slower processing times.

Hence, there may be a demand for an improved concept for object detectors.

This demand may be satisfied by the subject-matter of the appended independent claims. Optional embodiments thereof are disclosed in the appended dependent claims.

One idea of embodiments according to the present disclosure is to prune AI models or neural networks in a way such that a smaller model is obtained that is able to run on a mobile computing device with hardware restrictions, while preserving a desired robustness to out-of-distribution detection.

Embodiments of the present disclosure provide a method for pruning a neural network (also referred to herein as "AI model", "model", or "network") for an object detector. The method comprises identifying one or more critical neurons relevant for a first sub-category of an object class. Further, the method comprises adjusting the critical neurons in order to adapt such that a deviation between representations of the first sub-category and a second sub-category of the object class decreases in the latent space. Also, the method includes removing one or more of the critical neurons which are relevant for the first sub-category and less relevant (e.g., irrelevant or less than a predefined threshold for a relevance measure) for the second sub-category.

In this way, e.g., similar sub-categories can be merged in the latent space in order to reduce an overall complexity of the neural network to decrease computational resources required for operating the neural network while keeping a desired differentiation/distinction between object classes as well as a desired performance of the object detector and robustness against out-of-distribution (OOD) objects. In practice, this may allow real-time applications of the pruned neural network, for example, in automotive applications for autonomous and/or assisted driving.

Adjusting the critical neurons, e.g., comprises determining a variational distribution for the critical neurons and applying gradient descent optimization.

In doing so, adjusting the critical neurons may include adjusting the critical neurons using a multi-objective optimization loss function and based on a constraint for the neural network's performance. In this way, multiple objectives of the neural network may be improved or ideally optimized in order to at least maintain a desired overall general performance of the neural network for different objectives.

As well, adjusting the critical neurons may comprise applying regularization for other, non-critical neurons. In this way, the non-critical neurons may not be adjusted (significantly) in order to not impact the detection of other object classes.

In automotive applications, the object detector may be designed for the use in an assisted or autonomous driving system of a vehicle. In such applications, the object class may correspond to an object class in a traffic environment. So, the object class, e.g., relates to a class of objects which are usually found in traffic environments. The object class, e.g., is "vehicle", "pedestrian", "bicyclist", "building", "animal", and/or the like.

In automotive applications, the method further may further comprise providing an output of the object detector for controlling the vehicle.

A skilled person having benefit from the present disclosure will appreciate that the proposed approach may be not only applied for vehicles but also any other movable cyber physical system such as drones or robots, wherein examples of the object class may include different application-specific object classes.

Other embodiments of the present disclosure may provide an object detector obtainable by an embodiment of the proposed approach/method.

Further embodiments may provide a computer program comprising instructions which, when the computer program is executed by a computer, cause the computer to carry out an embodiment of the proposed method and/or provide an embodiment of the proposed object detector.

Still further embodiments may provide a computer-readable data carrier having stored thereon an embodiment of the proposed computer program.

Other embodiments provide an apparatus comprising one or more interfaces for communication and a data processing circuit configured to carry out an embodiment of the proposed method and/or provide an embodiment of the proposed object detector.

Further, embodiments are now described with reference to the attached drawings. It should be noted that the embodiments illustrated by the referenced drawings show merely optional embodiments as an example and that the scope of the present disclosure is by no means limited to the embodiments presented:

### Brief description of the drawings

- Fig. 1: shows a flow chart schematically illustrating an embodiment of a method for pruning a neural network for an object detector;
- Fig. 2a: schematically shows an initial stage of a neural network;
- Fig. 2b: schematically shows a final stage of the neural network; and
- Fig. 3: shows a block diagram schematically illustrating an embodiment of an apparatus according to the present disclosure.

The complexity of a neural network impacts computational resources by increasing the number of operations required for both training and inference. As the network grows in depth (more layers) and width (more neurons per layer), a number of parameters multiplies, leading to higher memory usage and more matrix multiplications. Each layer's computations are interdependent, meaning deeper networks require more sequential processing, increasing the demand for faster hardware and greater memory. This may result in longer training times and more data handling. Complex neural networks may be, therefore, unsuitable for some applications, in particular, real-time applications like in autonomous and/or assisted driving.

The present disclosure provides a solution to reduce the complexity of neural networks for object detectors while maintaining a desired overall detector performance and/or a desired robustness against OOD objects.

It should be understood that various modifications and variations may be made without departing from the scope of the present disclosure. Accordingly, the detailed description and specific examples provided herein are intended to be illustrative rather than limiting. Where appropriate, features of different embodiments may be combined or substituted to form further embodiments. The figures and examples are not necessarily drawn to scale, and like numerals in different figures may refer to similar elements. It is to be noted that the present disclosure can be practiced in the absence of any element not specifically disclosed herein, unless otherwise indicated.

A basic idea of the proposed approach is to investigate latent-space representations for sub-categories of an object class and using an optimization method (e.g., using a form of variational model optimization) to optimize specific or critical neurons for a first sub-category to produce approximately same latent representation as another second sub-category that may have been pre-selected and is supposed to be merged with the first sub-category. Once the network has been optimized the selected targeted neurons can pruned from the network and the network is validated and monitored to check that performance is maintained. The produced network is more robust for out-of-distribution detection as the relevant semantics are maintained.

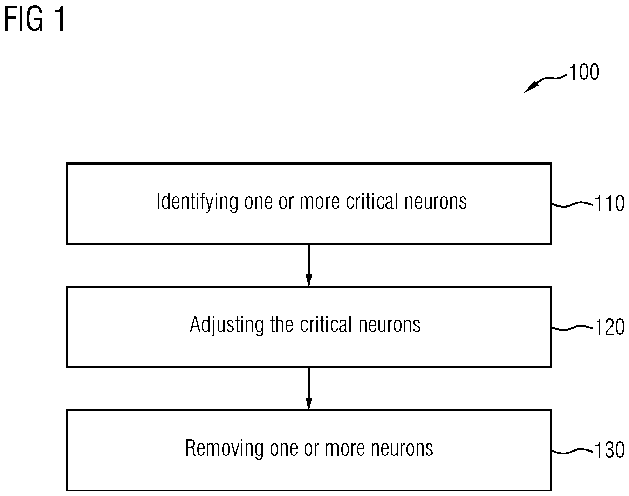

Fig. 1 shows a flow chart schematically illustrating an embodiment of a method 100 for pruning a neural network for an object detector.

In context of the present disclosure, pruning may refer to a process of reducing the size and complexity of a neural network by removing certain parameters, such as neurons, weights, and/or connections, without significantly impacting performance. As the skilled person will appreciate such technique may help in making models more efficient by eliminating redundant or less important elements, thus improving speed, reducing memory usage, and lowering computational costs.

As the skilled person will also appreciate, pruning may be applied in various types of neural networks, including convolutional neural networks (CNNs), recurrent neural networks (RNNs), fully connected neural networks (FCNs), transformers, generative adversarial networks (GANs), long short-term memory networks (LSTMs), and deep belief networks (DBNs). Accordingly, the proposed approach may be applied for various object detectors based on different types of neural networks.

As can be seen from the flow chart, method 100 comprises identifying 110 one or more critical neurons relevant for a first sub-category of an object class.

For this, one can apply neural network to examples of the sub-categories and record activations of each neuron. This allows to calculate a contribution score of neurons for the sub-categories, particularly for the first and the second sub-category. The contribution score can be understood as a measure for a relevance of a neuron for (detecting or assigning an object to) a sub-category of the object class. The contribution scores allow to generate a score map indicating a relevance of the neurons for the sub-categories. In practice, the contribution score and, thus, a relevance of a neuron for a certain sub-category is higher if the neuron is activated more strongly when the neural network is applied to instances/samples of that sub-category.

For a more reliable result, the calculation of the contribution score includes averaging absolute output values for the contribution scores of the neurons for different instances/samples of the sub-categories.

In practice, a neuron may be considered relevant for the first sub-category if the contribution score and/or a relevance exceeds a predefined threshold. Vice versa, neurons having a lower contribution score or relevance for the sub-category, e.g., falling short of a predefined threshold, may be considered less or not relevant or irrelevant for the sub-category and, thus, as "non-critical".

Further, method 100 comprises adjusting 120 the critical neurons such that a deviation between representations of the first sub-category and a second sub-category of the object class decreases in the latent space. For this, an objective or loss function can be modified to encourage proximity of latent space representations of the sub-categories. To this end, e.g., conditional machine learning techniques may be applied. For adjusting the critical neurons, a loss or objective function may be used which includes a penalty term based on a deviation of the latent space representation of the sub-categories. For this purpose, e.g., a (conditional) Variational Autoencoder (VAE)/variational distribution and/or Gradient Descent may be applied for the adjustment or optimization. The deviation, e.g., is based on a deviation of a mean or a minimum deviation of distributions for the sub-categories in the latent space.

In other words, for optimizing the critical neurons to produce the desired latent space representations, the critical neurons are treated as parameters and a variational distribution is defined over which neurons are optimized. Then, gradient descent optimization is used to jointly optimize this distribution and the weights of the network.

Additionally, or alternatively latent space regularization may be applied which introduces a regularization term and the loss function which reduces or minimizes the deviation between (means) of latent distributions for the sub-categories (e.g., using a magic like L2 or Kullback-Leibler divergence).

As a result, latent space representations of the sub-categories may belong to the same cluster in the latent space, is shown in more detail later. In other words, neurons relevant for the second sub-category may be redundant to the critical neurons relevant for the first sub-category. So, according to a basic idea of the proposed approach the adjusted critical neurons relevant (only) for the first sub-category may be obsolete/redundant and, thus, can be replaced by neurons relevant for the second sub-category.

Method 100 further comprises removing 130 one or more of the critical neurons which are relevant for the first sub-category and less relevant, not relevant, or irrelevant for the second sub-category. For this, neuron pruning may be applied, thereby removing the critical neurons which are (only) relevant for the first sub-category while retaining other non-critical neurons as well as neurons also relevant for other sub-categories, e.g., the second sub-category. For this, e.g., the contribution scores may be used to identify the critical neurons relevant for the first sub-category and irrelevant/not relevant or less relevant for the second sub-category.

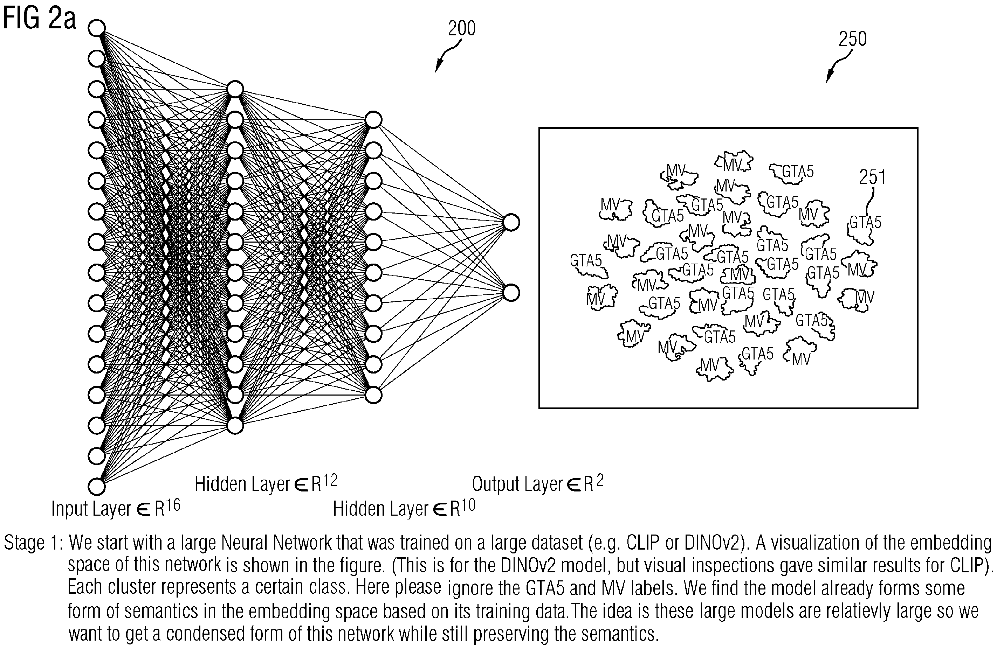

Fig. 2a exemplarily shows a schematic illustration of an original neural network 200 to which the proposed approach may be applied. As can be seen from a visual representation of the latent space 250, representations of different sub-categories may be located in separate clusters 251 in the latent space 250.

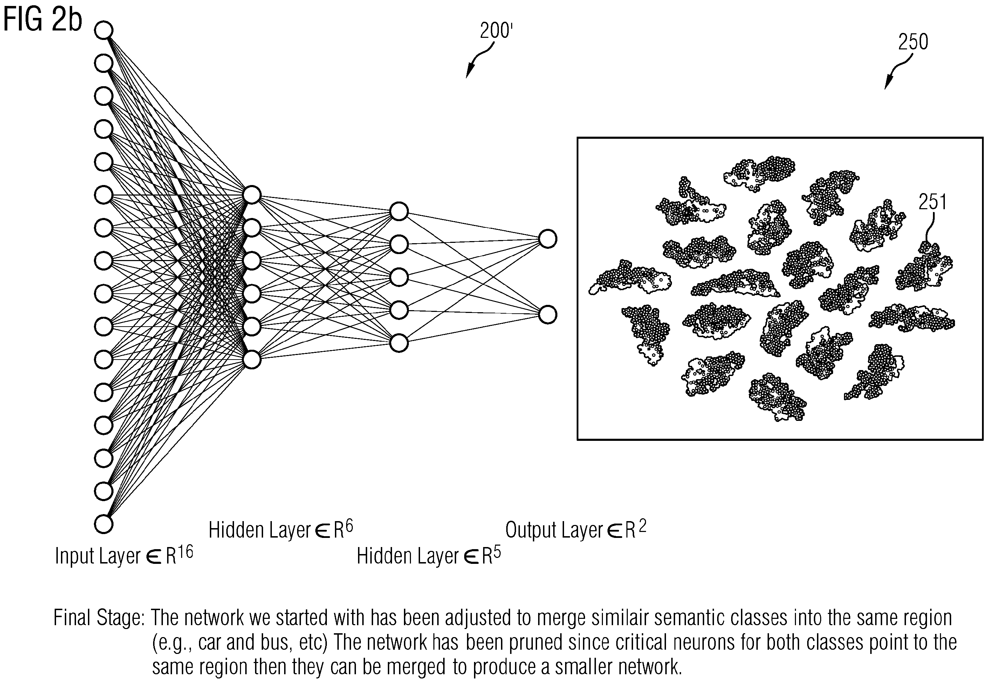

In comparison with Fig. 2b schematically illustrating a pruned network 200' obtained from the original network 200 through the proposed approach, it can be seen, that the suggested method 100 allows to significantly reduce the number of neurons and merges the clusters 251 of the different sub-categories for a lower number of clusters 251.

The pruned neural network may be then applied for object detection, thereby requiring less computational resources or costs than the initial ("unpruned") neural network.

The skilled person will appreciate that the pruned neural network may particularly exhibit at least the same or even an increased robustness against OOD objects comparison with the initial neural network.

In some embodiments, adjusting the critical neurons includes adjusting the critical neurons using a multi-objective optimization loss function and based on a constraint for the neural network's performance. In doing so, one can include general performance metrics used for training the original network where multiple objectives can be combined in the loss term using something like weighted Chebyshev scalarization and/or a weighting to each objective such that the model optimizes different or all desired objectives (e.g., localization of objects in addition to object classification).

In other words, to ensure the optimization doesn't negatively impact the network's performance on other tasks, the original network performance is implemented as constraints in a multi-objective optimization loss that balances achieving the desired output value (latent space representation) while maintaining the overall network performance.

Optionally, adjusting the critical neurons comprises applying regularization for other, non-critical neurons. In doing so, a term that discourages significant parameter changes of non-critical neurons may be added to the objective/loss function. As the skilled person will appreciate, different regularization techniques may be applied to this end, e.g., L1 or L2 regularization. To regularize non-critical neurons more strongly than the critical neurons, e.g., a higher/larger regularization coefficient may be applied for non-critical neurons to make parameter update smaller and vice versa for critical neurons for the first sub-category. In this way, an original function of the network may be preserved.

As the skilled person will appreciate, in some applications, the proposed approach may work particularly well for similar sub-categories in terms of their properties relevant for a desired application.

As mentioned above, in automotive applications, the object detector may be configured for the use in an assisted or autonomous driving system of a vehicle and the object class may correspond to an object class in a traffic environment. In such applications, sub-categories having similar properties relevant for assisted or autonomous driving may be selected for the proposed approach. As the skilled person will understand, the dynamics of objects is crucial for assisted or autonomous driving. Accordingly, in such applications, e.g., sub-categories for different objects approximately having the same properties with regards to their dynamics may be selected. So, e.g., sub-categories for different types of vehicles may be selected for the first and the second sub-category. For example, the first sub-category is "bus" and the second sub-category is "car", as laid out in connection with an exemplary embodiment of a multi-step procedure as follows:
- 1) Starting with a large model trained contrastively or using self-supervised learning on a large dataset for visual recognition tasks.

2) Building a taxonomy for (object) classes which are interesting for an autonomous driving use-case. (e.g., Vehicles, pedestrians, vulnerable road users, static objects, moving objects, etc)
3) Starting with the examples of vehicles, one can select a set of images for cars and identify a region in the feature/latent space where cars are represented in the model. Then, a second set of sub-categories for the vehicles is selected which are not visually similar to cars but belongs to the same category of vehicles (object class), e.g., busses. One can select a couple of examples of busses and identify the critical neurons.
4) The critical neurons for busses are adjusted or optimized to produce an output in the same region of the latent space as cars.
5) Pruning the identified neurons by neuron removal where the critical neurons (only relevant for busses) are removed and connections to the other neurons are adjusted to produce the same performance. The idea here is: After these critical neurons have been optimized to produce the same latent representation as cars, then, these neurons can be removed and substituted with ones from the original car neurons.
6) Validating the network using performance metrics and analysis of the latent space to verify

In practice, the proposed approach may be repeated for the same neural network and different sub-categories as well as different object classes to further reduce the number of neurons and, thus, the complexity of the neural network. For example, steps 3-6 are repeated for different classes until the model reaches a desired size.

In automotive applications for assisted or autonomous driving, the object detector may be used for controlling a vehicle. Accordingly, method 100 may further comprise providing an output of the object detector for controlling the vehicle. In practice, this, e.g., enables the vehicle or a respective assisted or autonomous driving system to maneuver the vehicle through a traffic environment in consideration of the object detector's output. As the skilled person will understand, since sub-categories exhibiting similar properties regarding application-relevant properties - for assisted or autonomous driving, their dynamics - have been selected, the neural network may work sufficiently well for the desired application even though the neural network may not distinguish between the selected sub-categories anymore after pruning. In some examples, similar sub-categories which can be merged may be identified by their semantic. Accordingly, examples of the proposed approach can be understood as "semantic-aware" approach for pruning.

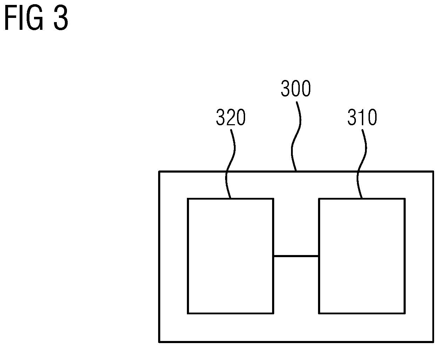

As mentioned above, besides an object detector obtainable by an embodiment of the proposed method, a computer program comprising for executing an embodiment of the method and/or providing such an object detector, and a computer-readable data carrier having stored thereon such computer program, the proposed approach may be implemented in an apparatus as laid out in more detail below with reference to Fig. 3.

Fig. 3 shows a block diagram schematically illustrating an embodiment of such an apparatus 300. The apparatus comprises one or more interfaces 310 for communication and a data processing circuit 320 configured to execute the proposed method.

In embodiments, the one or more interfaces 310 may comprise wired and/or wireless interfaces for transmitting and/or receiving communication signals in connection with the execution of the proposed concept. In practice, the interfaces, e.g., comprise pins, wires, antennas, and/or the like. As well, the interfaces may comprise means for (analog and/or digital) signal or data processing in connection with the communication, e.g., filters, samples, analog-to-digital converters, signal acquisition and/or reconstruction means as well as signal amplifiers, compressors and/or any encryption/decryption means.

The data processing circuit 320 may correspond to or comprise any type of programable hardware. So, examples of the data processing circuit 320, e.g., comprise a memory, microcontroller, field programable gate arrays, one or more central, and/or graphical processing units. To execute the proposed method, the data processing circuit 320 may be configured to access or retrieve an appropriate computer program for the execution of the proposed method from a memory of the data processing circuit 320 or a separate memory which is communicatively coupled to the data processing circuit 320.

In practice, the proposed apparatus may be installed on a vehicle. So, embodiments may also provide a vehicle comprising the proposed apparatus. In implementations, the apparatus, e.g., is part or a component of an assisted or autonomous driving system (ADS).

In the foregoing description, it can be seen that various features are grouped together in examples for the purpose of streamlining the disclosure. This method of disclosure is not to be interpreted as reflecting an intention that the claimed examples require more features than are expressly recited in each claim. Rather, as the following claims reflect, subject matter may lie in less than all features of a single disclosed example. Thus, the following claims are hereby incorporated into the description, where each claim may stand on its own as a separate example. While each claim may stand on its own as a separate example, it is to be noted that, although a dependent claim may refer in the claims to a specific combination with one or more other claims, other examples may also include a combination of the dependent claim with the subject matter of each other dependent claim or a combination of each feature with other dependent or independent claims. Such combinations are proposed herein unless it is stated that a specific combination is not intended. Furthermore, it is intended to include also features of a claim to any other independent claim even if this claim is not directly made dependent to the independent claim.

Although specific embodiments have been illustrated and described herein, it will be appreciated by those of ordinary skill in the art that a variety of alternate and/or equivalent implementations may be substituted for the specific embodiments shown and described without departing from the scope of the present embodiments. This application is intended to cover any adaptations or variations of the specific embodiments discussed herein. Therefore, it is intended that the embodiments be limited only by the claims and the equivalents thereof.

## Claims

1. A method (100) for pruning a neural network for an object detector, the method (100) comprising:
identifying (110) one or more critical neurons relevant for a first sub-category of an object class;
adjusting (120) the critical neurons such that a deviation between representations of the first sub-category and a second sub-category of the object class decreases in the latent space;
removing (130) one or more of the critical neurons which are relevant for the first sub-category and less relevant for the second sub-category.

2. The method (100) of claim 1, wherein adjusting the critical neurons comprises determining a variational distribution for the critical neurons and applying gradient descent optimization.

3. The method (100) of claim 1 or 2, wherein adjusting the critical neurons includes adjusting the critical neurons using a multi-objective optimization loss function and based on a constraint for the neural network's performance.

4. The method (100) of any one of the preceding claims, wherein adjusting the critical neurons comprises applying regularization for other, non-critical neurons.

5. The method (100) of any one of the preceding claims, wherein the object detector is for the use in an assisted or autonomous driving system of a vehicle, and wherein the object class corresponds to an object class in a traffic environment.

6. The method (100) of claim 5, wherein the method (100) further comprises providing an output of the object detector for controlling the vehicle.

7. An object detector obtainable by the method (100) of any one of the preceding claims.

8. A computer program comprising instructions which, when the computer program is executed by a computer, cause the computer to carry out the method (100) of any one of the claims 1 to 6 and/or provide an object detector according to claim 7.

9. A computer-readable data carrier having stored thereon the computer program of claim 8.

10. An apparatus (300) comprising:
one or more interfaces for communication; and
a data processing circuit configured to carry out the method (100) of any one of the claims 1 to 6 and/or provide an object detector according to claim 7.
